# EUROPEAN PATENT SPECIFICATION

(11) **EP 1 749 268 B1**
(45) Date of publication and mention of the grant of the patent: **25.03.2009**
(21) Application number: 05748135.0
(22) Date of filing: 14.05.2005
(51) Int. Cl.: G06F 13/40, G06K 7/00

(54) **METHOD FOR MANAGING THE PLUG-IN OR REMOVAL OF A MEMORY CARD INTO OR FROM A CARD READER AND APPARATUS FOR USE IN SAID METHOD**
VERFAHREN ZUR VERWALTUNG DES EINSTECKENS ODER ENTFERNENS EINER SPEICHERKARTE IN ODER AUS EINEM KARTENLESER UND VORRICHTUNG ZUM GEBRAUCH BEI BESAGTEM VERFAHREN
PROCEDE DE GESTION DE L'INTRODUCTION OU DU RETRAIT D'UNE CARTE A MEMOIRE DANS UN LECTEUR DE CARTE ET DISPOSITIF ASSOCIE

(30) Priority: 28.05.2004 EP 04012736; 26.11.2004 EP 04292800
(43) Date of publication of application: 07.02.2007
(73) Proprietor: Thomson Licensing, 92100 Boulogne (FR)
(72) Inventor: ZIOLKOWSKI, Andrzej, Singapore 309079 (SG); TAN, Beng Eng, 03-372 Singapore 600240 (SG); TAN, Su Mei, 05-06 Summerdale, Singapore 649925 (SG); LEE, Guan Swee, 02-29, Singapore 529236 (SG); LOW, Kok Seng, 11-489, Singapore 151057 (SG); AUYONG, Boon Eng, 09-55, Singapore 640212 (SG)
(74) Representative: Schäferjohann, Volker
(86) International application number: PCT/EP2005/005302
(87) International publication number: WO 2005/119469

(56) References cited:
- US-A1- 2003 154 326
- US-A1- 2004 078 514
- US-B1- 6 199 122

## Description

The invention relates to the field of handling data accesses to mass storage devices such as memory cards.

### Background of the invention

In the personal computer field a serial bus communication standard is known called USB = Universal Serial Bus. Different bus standards are known. USB in the version 1.1 supports two speed modes, 12 Mbit/s and 1.5 Mbit/s. USB in the version 2.0 supports high-speed data transport up to 480 Mbit/s. Most of today's peripherals to personal computers like printers, scanners, keyboards, mice, digital still cameras, etc. are equipped with an USB interface. USB interfaces are not only used in the PC industry. Nowadays there are also products from the CE industry existing having USB interfaces.

An example is a DVD player that has a USB interface for connecting with peripheral devices like a still camera. Instead of a camera a memory card reader may also be connected with the DVD player. There are all in one memory card readers existing that have slots for all the existing memory cards such as Memory Stick, Compact Flash, Smart Media, SD Card and Multimedia Card.

An USB-compliant device is always tagged with a USB class tag. A USB class describes a group of devices or interfaces with similar attributes or services. Mass storage devices class is one of the USB classes.

Mass storage devices class supports two main types of interface protocols, namely the Bulk-Only Transport and Control/Bulk/Interrupt (CBI) Transport. The CBI is approved for use only with full-speed floppy disk drives. CBI shall not be used in high-speed capable devices, or in devices other than floppy disk drives. For the data transport from or to memory cards/sticks the Bulk-Only Transport protocol is provided.

USB-compliant devices support the plug & play feature, also called life insertion feature. When a USB device is plugged-in, there will be an interrupt generated by the USB hardware and thus the USB host controller is notified. Likewise, when a USB device is unplugged, another interrupt will be generated by the USB hardware to signal the unplugging event to the USB host controller.

The application software of a DVD player equipped with USB interface supports the USB Mass Storage Device Class with Bulk-Only Interface Protocol. There are mainly two types of devices that fall under this classification, namely the USB thumb-drive and the USB memory card reader. The USB thumb-drive is easier to manage since it's a standalone device; one has to perform unplug and plug-in sequence if the user wants to access the content of another USB thumb-drive.

Unfortunately, this is not the case for the USB memory card reader; with the X-In-1 memory card reader, one doesn't have to unplug & plug-in the memory card reader in order to change a new memory card. In this case, the USB host Controller will not be informed about the device status change, and thus it will not perform a scanning of the directories/files to collect the Table of Content again (i.e. no refresh of the Table of Content will take place).

To make the matter worse, the volume information (containing directories and files) is buffered during a plug-in event and this buffered information is not cleared since the player does not know of the removal of the memory card. That will mean that the user can still navigate the directory/file list of the previously inserted memory card even though it was removed from the memory card reader, which is confusing and undesirable.

The player can also get confused and blocked by an error state during play back or scanning of the directory/file info of the memory card when it was unable to read any data from the device and normally it' 11 continue to wait until it finally gets timed-out.

From US-A-2004/0078514 an apparatus and method for simply launching a computer process to perform a task is known. According to this document a memory card reader is connected to a host computer via USB bus. The card reader comprises a micro-controller that has the ability to detect the insertion of a flash memory card. A device driver program in the host computer continually checks with the reader for any button activation.

### Invention

In order to overcome above-mentioned problem it is the general idea of the invention for a method for managing the plug-in or unplugging of a memory card into or from a card reader to periodically scan the at least one slot of a memory card reader for the presence of a memory card and if an inserted card will be detected, it will be registered in a registration section of the device.

The central device which contains the USB host controller performs a polling method in order to ensure that insertion/removal of a memory card will be detected.

This polling method may be interrupted during play-back of a file on an inserted memory card. It also may be interrupted during scanning the directory of the memory card. This is advantageous if the polling is performed in the play back and disc scanning engine, anyhow.

The described method is an extension to the USB Mass Storage Class - Bulk-Only Transport Specification.

For an apparatus for use in the method according to the invention it is advantageous if said apparatus comprises means for periodically sending control commands via the bus connection for scanning the at least one slot of a memory card reader for the presence of a memory card and that there are registration means comprised for registering the presence of an inserted memory card in a registration section.

Further advantageous embodiments are apparent from the respective dependent claims.

Additional advantageous embodiments for the play back and disc scanning engine are listed below:
I. During file scanning stage: When there is an error in reading file information from the memory card, the memory card will be considered removed. All information pertaining to the memory card will be erased.
II. During playback stage: When there is an error in reading data for playback from the memory card, the memory card will be considered removed. All information pertaining to the memory card will be erased.
III. During idle stage: There will be a periodic checking of the checksum of the memory card when the application is idle. When there is an error in reading data for calculating the checksum from the memory card, the memory card will be considered removed. All information pertaining to the memory card will be erased.

### Brief Description of the Drawings

Exemplary embodiments of the invention will be explained in more detail with reference to the drawings, which show in
- Fig.1: a DVD player and an external memory card reader connected to each other via USB bus connection; and
- Fig.2: a state diagram of the software that runs in the DVD player for managing insertion and removal of a memory card into or from the memory card reader.

### Exemplary embodiments

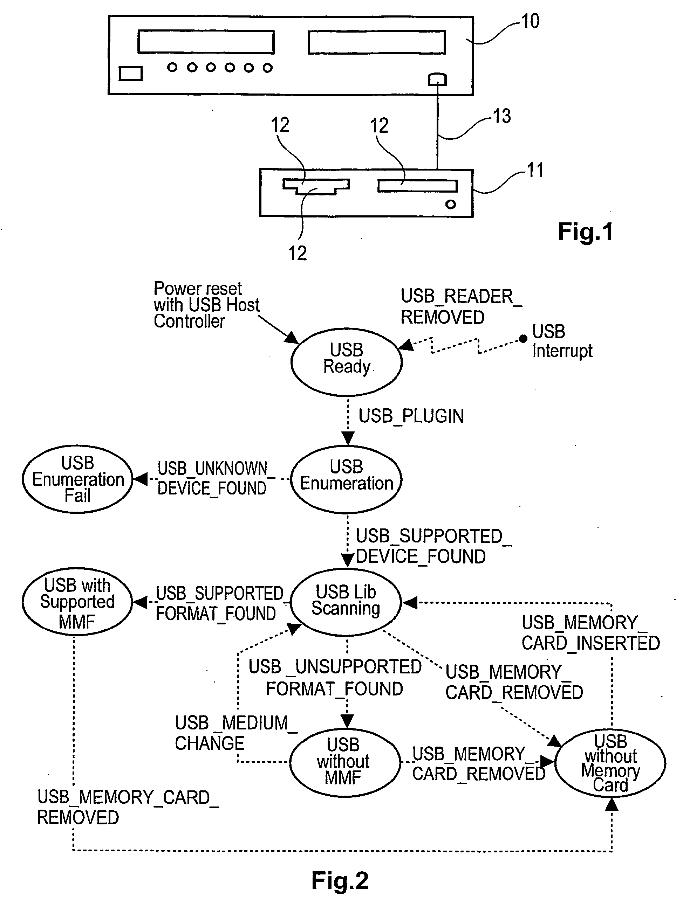

In Fig.1 reference number 10 denotes a DVD player. With reference number 11 an external memory card reader is denoted. The peripheral memory card reader 11 and the DVD player 10 are connected with each other via a USB bus connection 13.

The external memory card reader is considered to have a number of slots 12 for different types of memory cards. Currently the following different types of memory cards are on the market: Memory Stick, Multimedia Card, SD Card, Smart Media Card and Compact Flash Card. These cards have different forms and sizes as well as different types of contact lands. Therefore, to be able to deal with all of them the card reader 11 is equipped with a number of slots 12 of different sizes as shown in Fig.1.

USB uses a time-shared serial data stream. An addressing scheme allows up to 127 devices to be connected to the bus. The multi card reader has just one address assigned to it. There is only one master on the bus that usually is the PC. The master polls all connected peripherals at regular intervals of one millisecond. Each peripheral responds by placing its data on the time-multiplexed bus at its allocated time within this 1 ms frame.

In the application according to the invention with a point-to-point connection between DVD player 10 and card reader 11 the DVD player is configured to be the master for the bus management.

To simplify the handling of memory card reading, it may be specified that only one memory card may be inserted into the reader at a time.

Polling the card reader at a regular interval of 1 ms does not mean that the card reader places data onto the line if no read operation has been requested by the DVD player. Typically the DVD player calls for a read operation of a complete file, i.e. a selected still picture or audio file. After this read operation has been requested, the card reader places its data onto the line until the complete file has been transferred. When the reader is in idle state, so after the read operation has been completed, there is no data to be transferred.

Each USB peripheral requires a driver of its own class. As mentioned in the consistory clause the DVD player 10 equipped with USB interface supports the USB Mass Storage Device Class with Bulk-Only Interface Protocol. The appropriate low-level driver is either installed on the DVD player 10 as an integrated part of its software or it comes with the multi card reader 11 when purchased. In this case the user must install it.

Next, the structure of the application software using the low level driver for the card reader 11 is explained in connexion with Fig.2.

The USB application software is a state-machine with 7 states and 8 state variables. The state diagram is shown in Fig. 2. In Fig.2 the different states are depicted with a circle. The state transitions are illustrated with dashed arrows. The state variables causing the transitions are shown along the corresponding dashed arrows in capital letters. Next, the different states are described.

### USB_Ready

This state is entered after the DVD player has been powered on but no USB peripheral is connected. If an USB device is connected an interrupt is generated by the USB hardware and in the service routine a USE_PLUGIN message will be generated which causes a transition to the USB_Enumeration state.

### USB_ Enumeration

The process of bus enumeration is the activity that identifies and assigns unique addresses to devices that are attached to a bus. If a supported USB device (USB Reader / Thumbdrive) is detected, a USB_SUPPORTED_DEVICE_FOUND message will be sent and a transition to the USB_Library_Scanning state will occur. The user interface UI then will display the message "Scanning for files".

If an unknown USB device is detected, a USB_UNKNOWN_DEVICE_FOUND message will be sent and a transition to the USB_Enumeration_Fail_State is performed. The UI will output the message "Card Problem".

### USB_ Enumeration_Fail

If in this state the USB device is unplugged, an external interrupt will be triggered, a USB_READER_REMOVED message will be generated and a transition to the USB_Ready state occurs. The UI will display a "No Card" message or a "Reader Disconnected" message as the Reader is not in playback mode when this happens.

### USB_Lib_Scanning

Upon detection of supported Multi Media Files (MMF), a USB_SUPPORTED_FORMAT message will be sent and a transition to USB_With_Supported_MMF state is performed.

Upon detecting of unsupported MMF files, a USB_ UNSUPPORTED_FORMAT message is sent and a transition to the state USB_Without_MMF is carried out.

Upon not detecting a memory card connected to the reader, a USB_MEMORY_CARD_REMOVED message is generated which causes a transition to the USB_Without_Memory_Card state.

If the USB device is unplugged at the USB_Lib_Scanning state, an external interrupt will be triggered and again a USB_READER_REMOVED message is sent and a transition to the USB_Ready state performed. The UI will display a "No Card" message.

### USB_ With_Supported_MMF

If the Memory card is removed in this state, a USB_MEMORY_CARD_REMOVED message is generated accompanied by a transition to USB_Without_Memory_Card state. The UI will display "No Card".

If the USB device is unplugged, an external interrupt will be triggered and we will send a USB_READER_REMOVED message and transit to USB Ready. The UI will display "No Card" as we are not in playback mode when Reader is removed.

### USB_ Without_MMF

If the Memory card is removed, an USB_MEMORY_CARD_REMOVED message is sent accompanied with a transition to USB_Without_Memory_Card state. The UI will display "No Card".

If the USB device is unplugged, an external interrupt will be triggered and again a USB_READER_REMOVED message is sent accompanied with a transition to the USB_Ready state. The UI will display "No Card".

### USB_Without_Memory_Card

If the USB device is unplugged, an external interrupt will be triggered and a USB_READER_REMOVED message is sent and a transition to USB Ready state performed. The UI will display "No Card".

When a memory card is inserted, and the polling method according to the invention detects this event, a USB_Memory_Card_Inserted message is sent and a state transition to the USB_Lib_Scanning state performed. The UI outputs the "Scanning for files" message.

The polling is done ALWAYS i.e. in all above explained states except the USB_Ready state. The polling can be done e.g. every 100 ms, even e.g. during playback of a DVD.

Each slot 12 of a multi card reader will be checked whether there is a change in the memory card status (one card removed or a new card inserted). For this purpose a multi card reader has at least one register for each slot where it is indicated whether a card is inserted or not. Those registers can be read out separately via USB control commands. The USB driver software for the multi card reader supports this. Thus the device always knows the current status and does not give the user a "wrong" status information about available files. This is also done during playback, of a multimedia file from the inserted card, i.e. the device will not enter an error state, as it does no longer expect to receive data from a memory card that is already removed.

Below the state variables are listed and shortly explained:

### USB_PLUGIN

This message will be sent when a USB device is connected.

### USB_READER_REMOVED

Whenever the USB reader or device is disconnected from the USB port, an interrupt will be triggered and the USB_READER_REMOVED message will be sent.

### USB_SUPPORTED_DEVICE_FOUND

Upon successfully detecting a USB storage device (i.e USB Reader or Thumbdrive), this message will be sent.

### USB_UNKNOWN_DEVICE_FOUND

Upon failure to detect a USB storage device (i.e USB Reader or Thumbdrive), this message will be sent.

### USB_SUPPORTED_FORMAT_FOUND

If supported Multi Media Files (i.e MP3 / JPEG) are found in the Memory Card, this message will be sent.

### USB_UNSUPPORTED_FORMAT_FOUND

If no supported Multi Media Files (i.e MP3 / JPEG) are found in the Memory Card, this message will be sent.

### USB_MEMORY_CARD_INSERTED

This message will be sent when the explained USB polling method detected that a memory card has been inserted.

### USB_MEMORY CARD_REMOVED

Whenever a memory card is removed, this message will be sent.

Various modifications of the described embodiments are possible and fall under the scope of the below listed claims. It does not need a multi card reader for the solution according to the invention. Also a single card reader can benefit from the invention. It does not need to be a USB connection between DVD player and card reader. A different bus connection could be used, e.g. ATA / IDE or IEEE 1394. It does not need to be a DVD player where the invention is implemented. The same solution can also be used in some other CE device like HDD recorder, STB, etc. inclusive a PC.

## Claims

1. Method for managing the plug-in or plug-out operation of a memory card into or from a card reader (11) wherein the card reader (11) is connected with a central device (10) via a bus connection (13), wherein the plug-in or plug-out operation of the memory card is not reported to the central device (10), **characterized in that** an application program in the central device (10) periodically issues a read request in a polling operation to one or more registers informing about the slot status of the memory card reader (11) and **in that** if a card insertion is detected while said polling operation is performed, it is registered in a registration section of the central device (10) and if during a scanning operation or a playback operation a card removal is detected,
while said polling operation is performed, the file information or content directory for said removed memory card, stored in a memory of the central device (10), is deleted.

2. Method according to claim 1 wherein if a card removal is detected , an audio/visually warning message is generated for the user.

3. Method according to claim 1 or 2 wherein the card reader (11) is a peripheral device to the central device (10).

4. Method according to one of claims 1 to 3, wherein the bus connection (13) is a serial bus connection, in particular of the type USB or ATA or IDE.

5. Method according to one of the previous claims, wherein the registration section is part of the boot sector in the memory of the central device (10).

6. Apparatus for use in the method according to one of claims 1 to 5, comprising a bus connection (13) for connecting the apparatus with a memory card reader (11), **characterized in that** said apparatus comprises means for periodically sending a read request in a polling operation to a register in the memory card reader (11) informing about the status of one or more card slot via said bus connection (13) and comprising means for deleting the file information or content directory of a memory card stored in a memory of the apparatus upon detection, while said polling operation is performed, that the corresponding memory card is removed from said memory card reader during a scanning operation or a playback operation.

7. Apparatus according to claim 6, further comprising means for generating an audio/visually warning message for the user.

8. Apparatus according to claim 6 or 7, further comprising means for registering the presence of an inserted memory card in a registration section, wherein the registration section is part of the boot sector in the memory of the apparatus.

9. Apparatus according to one of the claims 6 to 8, wherein the bus connection (13) is a serial bus connection, in particular of the type USB or ATA or IDE.

## Patentansprüche

1. Verfahren für die Verwaltung des Vorgangs des Ein- oder Aussteckens einer Speicherkarte in ein bzw. aus einem Kartenlesegerät (11), wobei das Kartenlesegerät (11) über eine Busverbindung (13) mit einem Zentralgerät (10) verbunden ist, wobei der Vorgang des Ein- oder Aussteckens der Speicherkarte dem Zentralgerät (10) nicht gemeldet wird, **dadurch gekennzeichnet, dass** ein Anwendungsprogramm in dem Zentralgerät (10) in regelmäßigen Abständen in einem Abfragevorgang eine Leseanforderung an ein oder mehrere Register zur Information über den Zustand des Steckplatzes des Speicherkartenlesegerätes (11) ausgibt und dass, wenn bei Durchführung des Abfragevorgangs das Einsetzen einer Karte erkannt wird, dies in einem Registrierabschnitt des Zentralgerätes (10) registriert wird und dass, wenn während eines Abtastvorgangs oder eines Wiedergabevorgangs bei Durchführung des Abfragevorgangs das Entfernen einer Karte erkannt wird, die Dateiinformation oder der Ordner Content für die entfernte und in einem Speicher des Zentralgerätes (10) gespeicherte Speicherkarte gelöscht wird.

2. Verfahren nach Anspruch 1, wobei für den Benutzer eine akustische/optische Warnmeldung erzeugt wird, wenn ein Entfernen der Karte erkannt wird.

3. Verfahren nach Anspruch 1 oder 2, wobei das Kartenlesegerät (11) ein Peripheriegerät des Zentralgerätes (10) ist.

4. Verfahren nach einem der Ansprüche 1 bis 3, wobei die Busverbindung (13) eine serielle Busverbindung ist, insbesondere vom Typ USB oder ATA oder IDE.

5. Verfahren nach einem der vorhergehenden Ansprüche, wobei der Registrierabschnitt Teil des Boot-Sektors in dem Speicher des Zentralgerätes (10) ist.

6. Vorrichtung zur Anwendung bei dem Verfahren nach einem der Ansprüche 1 bis 5, umfassend eine Busverbindung (13) zum Anschluss der Vorrichtung an ein Speicherkartenlesegerät (11), **dadurch gekennzeichnet, dass** die Vorrichtung Mittel umfasst, mit denen in regelmäßigen Abständen in einem Abfragevorgang eine Leseanforderung an ein Register in dem Speicherkartenlesegerät (11) zur Information über den Zustand eines oder mehrerer Kartensteckplätze über die Busverbindung (13) gesendet wird, und Mittel umfasst, mit denen die Dateiinformation oder der Ordner Content einer in einem Speicher der Vorrichtung gespeicherten Speicherkarte gelöscht wird, wenn bei Durchführung des Abfragevorgangs erkannt wird, dass die entsprechende Speicherkarte während eines Abtastvorgangs oder eines Wiedergabevorgangs aus dem Speicherkartenlesegerät entfernt wird.

7. Vorrichtung nach Anspruch 6, ferner Mittel zur Erzeugung einer akustischen/optischen Warnmeldung für den Benutzer umfassend.

8. Vorrichtung nach Anspruch 6 oder 7, ferner Mittel umfassend, mit denen das Vorhandensein einer in einem Registrierabschnitt eingesetzten Speicherkarte registriert wird, wobei der Registrierabschnitt Teil des Boot-Sektors in dem Speicher der Vorrichtung ist.

9. Vorrichtung nach einem der Ansprüche 6 bis 8, wobei die Busverbindung (13) eine serielle Busverbindung ist, insbesondere vom Typ USB oder ATA oder IDE.

## Revendications

1. Procédé de gestion de l'opération d'insertion ou de retrait d'une carte mémoire dans ou d'un lecteur de cartes (11) dans lequel le lecteur de cartes (11) est connecté à un dispositif central (10) par l'intermédiaire d'une connexion par bus (13), dans lequel l'opération d'insertion ou de retrait de la carte mémoire n'est pas signalée au dispositif central (10), **caractérisé en ce qu'**un programme d'application du dispositif central (10) génère périodiquement une demande de lecture, au cours d'une opération d'interrogation, destinée à au moins un registre pour être informé sur l'état des fentes du lecteur de cartes (11) et **en ce que** si une insertion de carte est détectée lors de ladite opération d'interrogation, celle-ci est enregistrée dans une zone de la mémoire du dispositif central (10) et si, lors d'une opération de balayage ou de lecture, un retrait de carte est détecté, lors de ladite opération d'interrogation, les informations de fichier ou le répertoire du contenu correspondant à ladite carte de mémoire retirée enregistrés dans une mémoire du dispositif central (10), sont effacés.

2. Procédé selon la revendication 1, dans lequel si un retrait de carte est détecté, un message d'avertissement sonore ou visuel est généré à l'intention de l'utilisateur.

3. Procédé selon la revendication 1 ou 2, dans lequel le lecteur de cartes (11) est un dispositif périphérique du dispositif central (10).

4. Procédé selon l'une des revendications 1 à 3, dans lequel la connexion par bus (13) est une connexion par bus série, en particulier du type USB, ATA ou IDE.

5. Procédé selon l'une des revendications précédentes, dans lequel la zone d'enregistrement appartient à la partie d'amorçage de la mémoire du dispositif central (10).

6. Appareil destiné à être utilisé dans le procédé conforme à l'une des revendications 1 à 5, comportant une connexion par bus (13) pour connecter l'appareil à un lecteur de cartes mémoire (11), **caractérisé en ce que** ledit appareil comporte un moyen pour envoyer périodiquement une demande de lecture, lors d'une opération d'interrogation, à un registre du lecteur de cartes mémoire (11) pour être informé de l'état d'au moins une fente de la carte par l'intermédiaire de ladite connexion par bus (13) et comportant un moyen pour effacer les informations de fichier ou le répertoire du contenu d'une carte mémoire enregistrés dans une mémoire de l'appareil en cas de détection, lors de ladite opération d'interrogation, du retrait de la carte correspondante dudit lecteur de cartes mémoire, lors de ladite opération pendant une opération de balayage ou de lecture.

7. Appareil selon la revendication 6, comportant en outre un moyen de génération d'un message d'avertissement sonore ou visuel à l'intention de l'utilisateur.

8. Appareil selon la revendication 6 ou 7, comportant en outre un moyen d'enregistrement de la présence d'un carte mémoire insérée dans une zone d'enregistrement, dans lequel la zone d'enregistrement appartient à la partie d'amorçage de la mémoire de l'appareil.

9. Appareil selon l'une des revendications 6 à 8, dans lequel la connexion par bus est une connexion par bus série en particulier du type USB, ATA ou IDE.
